# EUROPEAN PATENT APPLICATION

(11) **EP 0 745 973 A2**
(43) Date of publication of application: **04.12.1996**
(21) Application number: 96201469.2
(22) Date of filing: 28.05.1996
(51) Int. Cl.: G11B 5/584

(54) **Apparatus for reproducing an information signal on a record carrier, provided with a tracking control system**

(30) Priority: 31.05.1995 JP 158452/95
(71) Applicant: PHILIPS ELECTRONICS N.V., 5621 BA Eindhoven (NL)
(72) Inventor: Furuya, Hideaki, 5656 AA Eindhoven (NL)
(74) Representative: van der Kruk, Willem Leonardus

(57) **Abstract**

It is to provide an apparatus for reproducing an information signal from a track on a record carrier for realizing that a level of a tracking signal including a S/N respect of a reproducing signal by reproducing (compensating) the cross-talk component.

A distance between a first magnetic head (4) which has a plus azimuth angle and a second magnetic head (5) which has a minus azimuth angle is provided along a circumferential and a axis direction of a rotational cylinder (3), so that a second head (5) can be scanned a track which is scanned by a first head (4). Tracking signals are filtered by filters (11,12) and a tracking control signal is generated from those filtered signal so as to control the rotation of the rotary head drum.

## Description

The present invention relates to an apparatus for reproducing an information signal from a record carrier, comprising a first head having a first azimuth angle and a second head having a second azimuth angle different from the first azimuth angle, both heads being located on a rotary head drum,.

A magnetic recording and reproduction apparatus such as an 8-mm VTR, a DAT, and the like are well known in the art. Reference is made in this respect to the book 'The art of digital audio' by J. Watkinson, see eg. the pages 283-289. Such known apparatus performs a tracking control so that a magnetic head may exactly scan a recording track on a recording medium. In order to implement such a tracking control, a pilot signal (tracking signal) as represented by an ATF signal, for example, is recorded superposably on each track. When a magnetic head scans a recording track, a reproduction signal contains a pair of tracking signals recorded on a pair of recording tracks which are adjacent to each other as a part of crosstalk components. A tracking circuit for performing a tracking control extracts a pair of tracking signals from a reproduction signal and judges whether its tracking is good or wrong and whether its tracking is deviated to the preceding track side or the following track side. Additionally, on the basis of a result of this judgement, the tracking circuit controls a control circuit for controlling a motor driving a rotary cylinder to keep a good tracking state.

Figure 4 is a figure for explaining a scanning state of a magnetic head scanning over an existing typical magnetic recording medium. As shown in the figure, a magnetic head 1 having a plus azimuth angle scans a track Ta (having a tracking signal of f0 in frequency) having data recorded with a plus azimuth angle on a magnetic tape T. In this case, the magnetic head 1 scans parts of a track Tb1 (having a tracking signal of f1 in frequency) and a track Tb2 (having a tracking signal of f2 in frequency) which are adjacent to the track Ta and have a minus azimuth angle.

When the magnetic head 1 scans the tracks Tb1 and Tb2 having a different azimuth angle, the head 1 generates not only a main signal on the basis of the track Ta but also crosstalk components on the basis of the tracks Tb1 and Tb2. The crosstalk components are effectively used for a tracking control as described above, but are a noise component to the main signal. Namely, the crosstalk component results in deteriorating an S/N ratio of the main signal.

The lower the level of a crosstalk component is, the better the S/N ratio of the main signal is improved. There is a problem, however, that since a tracking signal is generated by a magnetic head having an azimuth angle different from the recording azimuth angle, it is impossible to secure a tracking signal having a level necessary for attaining a tracking control when lowering the recording level. Namely, it has been difficult to implement a method of improving an S/N ratio of a main signal by lowering a recording level.

The present invention provides a tracking control system which makes it possible to secure a tracking signal having a level necessary for attaining a tracking control as well as to lower a recording level of the tracking signal and, as a result, makes it possible to decrease the crosstalk component, namely, to improve an S/N ratio of the main signal.

A apparatus in accordance with the invention is characterized in that the first and second head are positioned in such a position relative to each other on the head drum that they scan the same track, whereas the second head scans the track a predetermined time interval later than the first track, the apparatus further comprising
- first and second filter means for filtering tracking signals reproduced by at least one of the two heads from two tracks lying directly adjacent said track to be reproduced,
- tracking control signal generator means for generating a tracking control signal from the tracking signals reproduced from the adjacent tracks,
- driving means for driving the rotation of the rotary head drum in response to said tracking control signal.

In a reproducing apparatus having the above-mentioned composition, an azimuth angle of a recording track corresponding to a crosstalk component from which a tracking signal is extracted and an azimuth angle of a magnetic head to perform reproduction on the recording track coincide with each other. Therefore, it is possible to obtain a tracking signal having a level necessary for performing a tracking control even if lowering a recording level of a tracking signal to a low level at which a magnetic head having a reverse azimuth angle cannot completely reproduce the tracking signal. And as a result of lowering a recording level of a tracking signal, an S/N ratio of a reproduction signal is improved.

It should be noted that USP 5,089,918 discloses a reproducing apparatus provided with an alike head construction as proposed above. Contrary to this, tracking is realized by means of controlling the rotary head drum rotation.

These and other aspects of the invention will be explained in greater detail by means of the following exemplary embodiments, in which the same reference numerals generally refer to the same parts.

Figure 1 is a conceptual figure of a rotary cylinder of the apparatus according to the invention.

Figure 2 is a figure for explaining a scanning state of magnetic heads according to the invention.

Figure 3 is a conceptual figure of the reproducing apparatus in accordance with the invention.

Figure 4 is a figure for explaining a scanning state of a magnetic head being generally in use up to now.

A reproducing apparatus in accordance with the invention is implemented by combination of a rotary cylinder having a plus azimuth head and a minus azimuth head mounted on it and a processing circuit for processing output from the plus azimuth head and the minus azimuth head, namely, a reproduction signal.

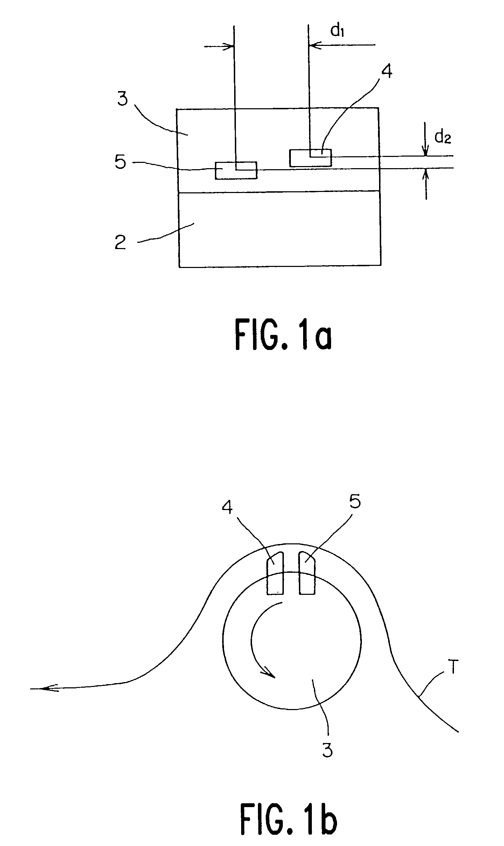

Figure 1 is a conceptual figure of a rotary cylinder according to the invention.

Figure la is a side view of a stationary drum 2 (or the rotary cylinder 3) of the invention seen from side. A plus azimuth head (a first magnetic head) 4 and a minus azimuth head (a second magnetic head) 5 are mounted on the rotary cylinder 3 which is set above the stationary drum 2 so as to be freely rotated. The heads 4 and 5 are mounted on the rotary cylinder 3 separately from each other at an interval d1 between them along the circumferential direction and at an interval d2 along the axial direction of the rotary cylinder 3.

Figure 1b is a plan view of the rotary cylinder 3 of the invention seen from above. A magnetic tape T is put round the rotary cylinder 3. Tracks provided on this magnetic tape T are scanned by the heads 4 and 5 with running of the magnetic tape and rotation of the rotary cylinder 3.

The intervals d1 and d2 which are set between the heads 4 and 5 are intervals provided for attaining a scanning scheme in which the head 5 scans a track a specified time after the head 4 has scanned the track. Namely, the heads 4 and 5 scan the same track with a certain time difference thanks to setting the intervals d1 and d2.

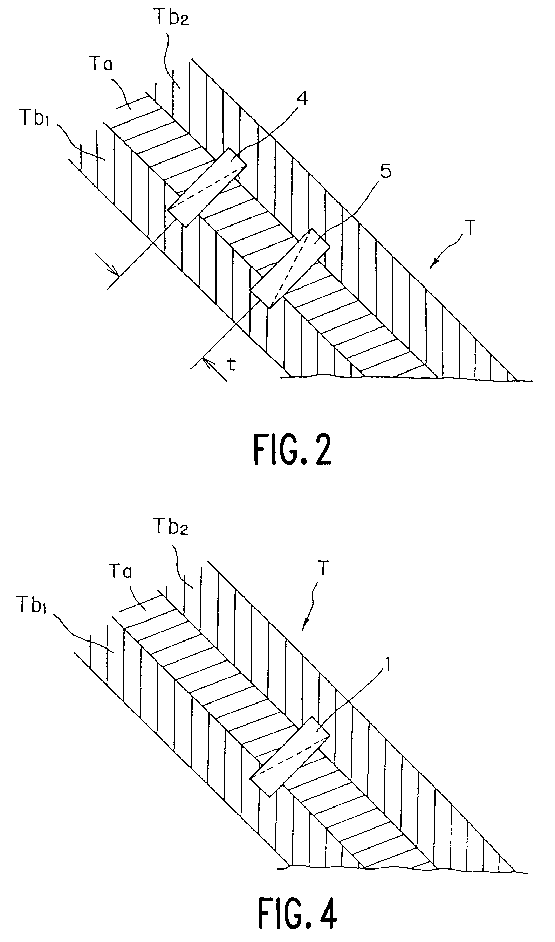

Figure 2 shows a figure for explaining a scanning state of the magnetic heads according to the invention.

As shown in the figure, the head 5 scans a position a time t after the head 4 has scanned the position. The scanning state shown in the figure shows a state where the heads 4 and 5 scan an plus azimuth track Ta. In this case, a reproduction signal of the head 4 (a first reproduction signal) is treated as a reproduction signal in fact and is processed for reproduction in a signal processing circuit in a later stage. A reproduction signal of the head 5 (a second reproduction signal) is used for reducing a crosstalk component contained in the first reproduction signal. In the same manner, in case that the heads 4 and 5 scan the minus azimuth track Tb1 for example, the second reproduction signal of the head 4 is treated as a reproduction signal in fact and the first reproduction signal of the head 4 is used for reducing a crosstalk component contained in the second reproduction signal.

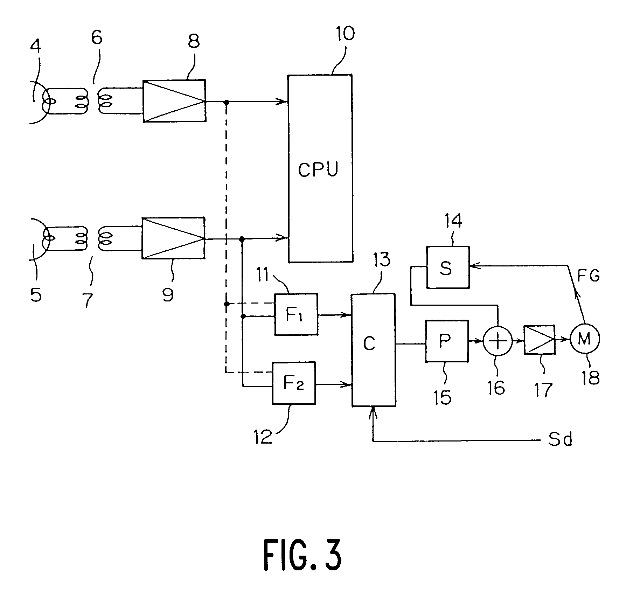

Figure 3 shows a conceptual figure of the reproducing apparatus in accordance with the invention.

As shown in the figure, the plus and minus azimuth heads (the first and second magnetic heads) 4 and 5 are, respectively, connected with amplifiers 8 and 9 through rotary transformers 6 and 7. Output of the amplifier 8 is connected with a processor (CPU) 10. On the other hand, output of the amplifier 9 is connected with the processor 10 and the first and second filters (F1 and F2) 11 and 12. Outputs of the first and second filters 11 and 12 are connected with a discriminating circuit (C) 13. Output of the discriminating circuit 13 is connected with an adder 16 through a phase control circuit (P) 15. Output of the adder 16 is connected with a motor 18 for driving the rotary cylinder 3 (Figure 1) through an amplifier 17. An FG output provided on the motor 18 is entered into a speed control circuit 14. Output of the speed control circuit 14 is connected with the adder 16. A direction signal Sd from a non-illustrated monitoring circuit for monitoring a relative speed is inputted into the discriminating circuit 13 in order to determine whether to increase or to decrease the relative speed between the magnetic recording medium (magnetic tape) and the rotary cylinder 3 to perform a tracking control.

The speed control circuit 14, the phase control circuit 15, the adder 16, and the amplifier 17 are ordinal components generally used as components for performing a rotation control of the motor 18 for driving the rotary cylinder 3. That is to say, the invention can utilize components to be mounted on a tracking control circuit being generally in use up to now.

Now, in case that the heads 4 and 5 scan a track Ta for example, the amplifier 8 outputs the first reproduction signal containing the first crosstalk component corresponding to contents recorded on the tracks Tb1 and Tb2. In the same manner, the amplifier 9 also outputs the second reproduction signal containing the second crosstalk component corresponding to contents recorded on the tracks Tb1 and Tb2.

The first filter 11 extracts a tracking signal f1 recorded on the track Tb1 for example from the second crosstalk component and outputs its level L1 to the discriminating circuit 13. In the same manner, the second filter 12 extracts a tracking signal f2 recorded on the track Tb2 for example from the second crosstalk component and outputs its level L2 to the discriminating circuit 13. The discriminating circuit 13, for example, instructs the phase control circuit 15 to perform a control to raise a frequency of a driving pulse signal, for example, in case that the discriminating circuit 13 has judged that a direction signal Sd is at high level, namely, level L1 is higher than level L2 in a state showing a direction to increase a relative speed. The discriminating circuit 13, for example, instructs the phase control circuit 15 to perform a control to lower a frequency of a driving pulse signal in case that the discriminating circuit 13 has judged that level L2 is higher than level L1. In case that the direction signal Sd is at low level, namely, a direction to decrease the relative speed is shown, a process of controlling the phase control circuit 15 is reverse to the above-mentioned case.

As described above, the invention attains a tracking control for the heads 4 and 5 to track the track Ta (following track) by extracting a tracking signal from the second crosstalk component of the second reproduction signal. And the processor 10 outputs the first reproduction signal to a non-illustrated signal processing circuit in a later stage, treating the first reproduction signal as a signal to be actually reproduced.

Since an azimuth angle of the head 5 coincides with azimuth angles of the recording tracks Tb1 and Tb2 corresponding to the second crosstalk component, the second crosstalk component represents more exactly contents of the recording tracks Tb1 and Tb2 (tracking signals) and is higher in level than the first crosstalk component. In other words, it is possible to lower the recording level of a tracking signal in case of taking from the second crosstalk component a tracking signal having a level equal to that of a tracking signal formerly taken from the first crosstalk component.

When a recording level of a tracking signal is lowered, a level of the first crosstalk component of the first reproduction signal is lowered, and as a result it is possible to raise an S/N ratio of the first reproduction signal.

Thus, in case of performing a tracking control only when scanning a recording track Ta having a plus azimuth angle, a tracking control is implemented by means of the above-mentioned circuit configuration and processing. Furthermore, in case of performing a tracking control also when scanning a recording track Tb, for example, having a minus azimuth angle, the first reproduction signal outputted from the amplifier 8 is supplied to the first and second filters 11 and 12. And the processor 10, for example, controls selection of input signals to be entered into the filters 11 and 12. Namely, in case that the heads 4 and 5 scan the recording track Ta, the second reproduction signal is supplied to the filters 11 and 12. And in case that the heads 4 and 5 scan the recording track Tb1, for example, the first reproduction signal is supplied to the filters 11 and 12, and a tracking control is performed on the basis of the first crosstalk component. In this case also similarly, since an azimuth angle of the head 4 coincides with an azimuth angle of the track Ta corresponding to the first crosstalk component, a tracking signal having a level high enough to attain a tracking control can be obtained even if a recording level of the tracking signal is low.

As described above, one track is scanned by means of a plus azimuth head and a minus azimuth head, in which a crosstalk component from which a tracking signal is extracted has an azimuth angle coinciding with an azimuth angle of a track corresponding to this crosstalk component. As a result, a tracking signal having a higher level can be obtained than a level obtained in case of scanning the track by means of a head having a different azimuth angle, even if lowering a recording level of the tracking signal. Therefore, a component caused by a tracking signal in a crosstalk component of a reproduction signal can be reduced, and as a result it is possible to raise an S/N ratio of a reproduction signal.

## Claims

1. An apparatus for reproducing an information signal recorded in a track on a record carrier, comprising a first head having a first azimuth angle and a second head having a second azimuth angle different from the first azimuth angle, both heads being located on a rotary head drum,
characterized in that the first and second head are positioned in such a position relative to each other on the head drum that they scan the same track, whereas the second head scans the track a predetermined time interval later than the first track, the apparatus further comprising
- first and second filter means for filtering tracking signals reproduced by at least one of the two heads from two tracks lying directly adjacent said track to be reproduced,
- tracking control signal generator means for generating a tracking control signal from the tracking signals reproduced from the adjacent tracks,
- driving means for driving the rotation of the rotary head drum in response to said tracking control signal.
